# EUROPÄISCHE PATENTSCHRIFT

(11) **EP 1 524 566 B1**
(45) Veröffentlichungstag und Bekanntmachung des Hinweises auf die Patenterteilung: **09.04.2008**
(21) Anmeldenummer: 04023349.6
(22) Anmeldetag: 30.09.2004
(51) Int. Cl.: G05B 19/042, G05B 19/05, G05B 19/418

(54) **Steuerverfahren für eine Produktionsmaschine**
Control method for production machine
Procédé de commande pour machines de production

(30) Priorität: 15.10.2003 DE 10347972
(43) Veröffentlichungstag der Anmeldung: 20.04.2005
(73) Patentinhaber: SIEMENS AKTIENGESELLSCHAFT, 80333 München (DE)
(72) Erfinder: Dolansky, Stefan, 90518 Altdorf (DE)

(56) Entgegenhaltungen:
- EP-A- 0 927 600
- US-A- 4 488 241
- US-B1- 6 547 884

## Beschreibung

Die vorliegende Erfindung betrifft ein Steuerverfahren für eine Produktionsmaschine, insbesondere eine Werkzeugmaschine, durch eine der Produktionsmaschine zugeordnete Steuereinrichtung.

Die vorliegende Erfindung betrifft ferner ein auf einem Datenträger gespeichertes Computerprogramm, das Maschinencode enthält, der von einer Steuereinrichtung einer Produktionsmaschine ausführbar ist. Weiterhin betrifft sie eine Steuereinrichtung für eine Produktionsmaschine, insbesondere eine Werkzeugmaschine, mit einem Programmspeicher, in dem ein Computerprogramm hinterlegt ist, das von der Steuereinrichtung ausführbaren Maschinencode enthält. Schließlich betrifft die vorliegende Erfindung eine Produktionsmaschine, insbesondere eine Werkzeugmaschine, mit einer zugeordneten Steuereinrichtung und einer Anzahl von Komponenten, wobei von der Steuereinrichtung im Betrieb der Produktionsmaschine ein derartiges Steuerverfahren ausgeführt wird.

Derartige Steuerverfahren, Computerprogramme, Steuereinrichtungen und Produktionsmaschinen sind allgemein bekannt.

Aus der EP 0 927 600 A1 ist ein Steuerverfahren für eine Produktionsmaschine durch eine der Produktionsmaschine zugeordnete Steuereinrichtung bekannt, wobei die Produktionsmaschine eine Anzahl von Komponenten aufweist und entweder der jeweiligen Komponente selbst oder einer der jeweiligen Komponente beigeordneten Komponente jeweils ein Speicher zugeordnet ist, in dem jeweils ein eindeutiger Identifikationscode für die jeweilige Komponente hinterlegt ist. Die Steuereinrichtung greift auf den Identifikationscode und mittels des Identifikationscodes auf Parameterdaten für die jeweilige Komponente zu, die in einem Speicherbereich eines Rechners hinterlegt sind. Der Rechner ist eine von der Steuereinrichtung verschiedene Einrichtung, mit dieser über eine Rechner-Rechner-Verbindung aber zumindest temporär verbindbar. Die Steuereinrichtung ermittelt anhand eines Steuerprogramms Steuerbefehle für Aktoren der Produktionsmaschine, die von den Parameterdaten abhängen, und gibt sie an die Aktoren aus.

Produktionsmaschinen werden von Steuereinrichtungen gesteuert. Die Steuereinrichtungen sind dabei zumeist entweder als numerische Steuerungen (CNC) oder als speicherprogrammierbare Steuerungen (SPS) ausgebildet. Sie führen ein Steuerprogramm aus, das aus Befehlen besteht, bei einer Werkzeugmaschine z. B. aus einem Teileprogramm gemäß DIN 66025.

Die Befehle werden von der Steuereinrichtung in Abhängigkeit von einer Vielzahl von Maschinenparametern in Steuerbefehle umgesetzt. Ein Beispiel eines derartigen Maschinenparameters ist die Dynamik eines Antriebs. Zur ordnungsgemäßen Ermittlung der Steuerbefehle ist es daher erforderlich, der Steuereinrichtung diese Maschinenparameter in Form entsprechender Parameterdaten bekannt zu geben. Beispiele derartiger Parameterdaten sind eine Motorkennlinie oder andere Motormessdaten oder z. B. eine Steigungskennlinie einer Spindel.

Im Stand der Technik werden die Parameterdaten über eine Programmiereinrichtung in die Steuereinrichtung eingegeben. Diese Vorgehensweise ist insbesondere deshalb nachteilig, weil nicht mit Sicherheit gewährleistet werden kann, dass die Parameterdaten die tatsächlichen Maschinenparameter korrekt beschreiben.

Es ist denkbar, für jede Komponente entweder in der Komponente selbst oder in einer der jeweiligen Komponente beigeordneten Komponente Parameterdaten zu hinterlegen, welche die Maschinenparameter der jeweiligen Komponente beschreiben. Diese Vorgehensweise würde gewährleisten, dass die Parameterdaten die tatsächlichen Maschinenparameter korrekt beschreiben. Je nach Umfang der Parameterdaten wäre es aber erforderlich, auf den jeweiligen Komponenten große Speicherbereiche vorzusehen, um die Gesamtheit aller Parameterdaten hinterlegen zu können.

Mit dem aus der EP 0 927 600 A1 bekannten Steuerverfahren ist bereits eine erhebliche Verbesserung verbunden, weil zwischen den Komponenten und der Steuereinrichtung keine großen Datenmengen mehr ausgetauscht werden müssen. Die Datenhaltung und -verwaltung muss bei der Lehre der EP 0 927 600 A1 aber zentral erfolgen und ist kompliziert.

Die Aufgabe der vorliegenden Erfindung besteht darin, ein Steuerverfahren für eine Produktionsmaschine zu schaffen, bei dem die Datenhaltung und -verwaltung einfacher ist und dennoch keine großen Datenmengen zwischen den Komponenten und der Steuereinrichtung ausgetauscht werden müssen.

Die Aufgabe wird durch die Merkmale der unabhängigen Ansprüche gelöst.

Dadurch können bei Inbetriebnahme der Produktionsmaschine automatisiert die Parameterdaten abgerufen werden, so dass eine plug & play-Funktionalität realisierbar ist. Dabei ist pro Komponente nur ein sehr kleiner Speicher von z. B. 128 oder 256 Byte erforderlich. Über den Linkadressensatz ist dann aber auf eine prinzipiell unbegrenzte Datenmenge zugreifbar. Die Parameterdaten können dabei zu einem beliebigen Zeitpunkt, insbesondere sowohl vor als auch nach der Auslieferung der zugehörigen Komponenten, im Speicherbereich des Rechners hinterlegt und auch geändert werden.

Vorzugsweise umfasst der Linkadressensatz auch eine Schreibadresse. Denn dann kann die Steuereinrichtung über mindestens einen Sensor für mindestens eine der Komponenten einen Komponentenzustand erfassen und zumindest von Zeit zu Zeit den erfassten Komponentenzustand oder eine aus dem erfassten Komponentenzustand abgeleitete Information über die dieser Komponente zugeordnete Schreibadresse an den Rechner übermitteln.

Somit ist zentral auf bessere und einfachere Weise eine Auswertung des Komponentenzustands möglich. Z. B. ist es zentral, also rechnerseitig, möglich, rechtzeitig Wartungsmaßnahmen zu erkennen, wenn diese erforderlich werden sollten. Auch ist es auf einfachere Weise durch Vergleich der übermittelten Komponentenzustände bzw. der daraus abgeleiteten Informationen für mehrere Komponenten des gleichen Typs möglich, Bauartfehler zu erkennen, wenn solche vorhanden sein sollten.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: schematisch eine Werkzeugmaschine und Recheneinrichtungen,
- FIG 2: eine Teildarstellung von FIG 1 und
- FIG 3: ein Ablaufdiagramm.

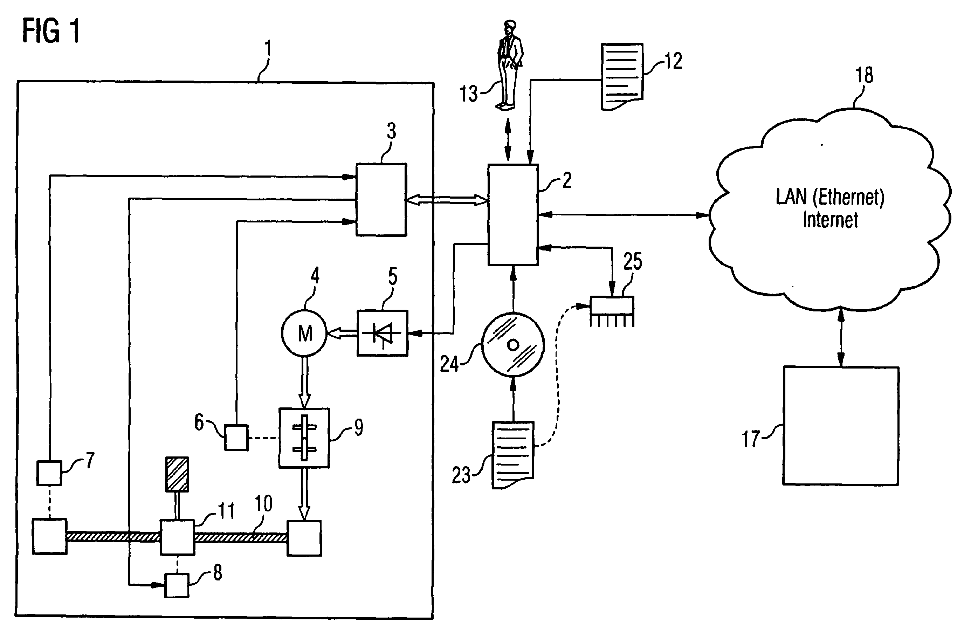

Gemäß FIG 1 ist einer Werkzeugmaschine 1 als Beispiel einer Produktionsmaschine 1 eine Steuereinrichtung 2 zugeordnet. Die Steuereinrichtung 2 ist im vorliegenden Fall als numerische Steuerung 2 ausgebildet. Bei einer anderen Ausgestaltung der Produktionsmaschine 1 wäre es aber auch möglich, dass die Steuereinrichtung 2 als speicherprogrammierbare Steuerung ausgebildet ist.

Die Werkzeugmaschine 1 weist ferner eine Anzahl von Komponenten 3 bis 11 auf. Beispielhaft sind in FIG 1 dabei folgende Komponenten 3 bis 11 dargestellt:
- Eine Ein- und Ausgabebaugruppe 3,
- ein Motor 4,
- ein Umrichter 5 als Beispiel einer Strcmversorgungseinrichtung 5,
- zwei Sensoren 6, 7,
- ein Aktor 8,
- ein Getriebe 9,
- eine Spindel 10 und
- ein Werkzeughalter 11.

Die Werkzeugmaschine 1 weist also sowohl elektrische Komponenten, nämlich die Komponenten 3 bis 8, als auch rein mechanische Komponenten, nämlich die Komponenten 9 bis 11 auf.

Mittels des Motors 4 ist beispielsweise über das Getriebe 9 die Spindel 10 und mit ihr der Werkzeughalter 11 verstellbar.

Die Stromversorgung des Motors 4 erfolgt dabei über den Umrichter 5. Mittels der Sensoren 6 und 7 sind z.B. die Temperatur des Getriebes 9 und die Lage der Spindel 10 erfassbar. Mittels des Aktors 8 erfolgt z.B. das Betätigen des Werkzeughalters 11.

Die von den Sensoren 6, 7 erfassten Signale werden über die Ein-/Ausgabebaugruppe 3 an die Steuereinrichtung 2 weitergeleitet. Ebenso werden von der Steuereinrichtung 2 ermittelte, an den Aktor 8 auszugebende Steuerbefehle über die Ein-/Ausgabebaugruppe 3 an den Aktor 8 ausgegeben.

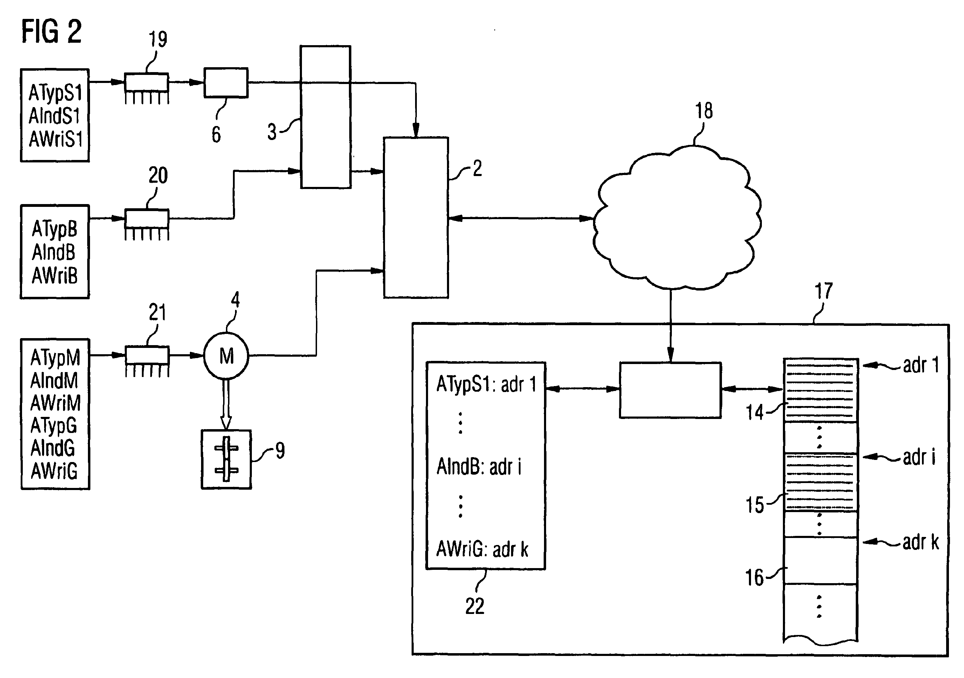

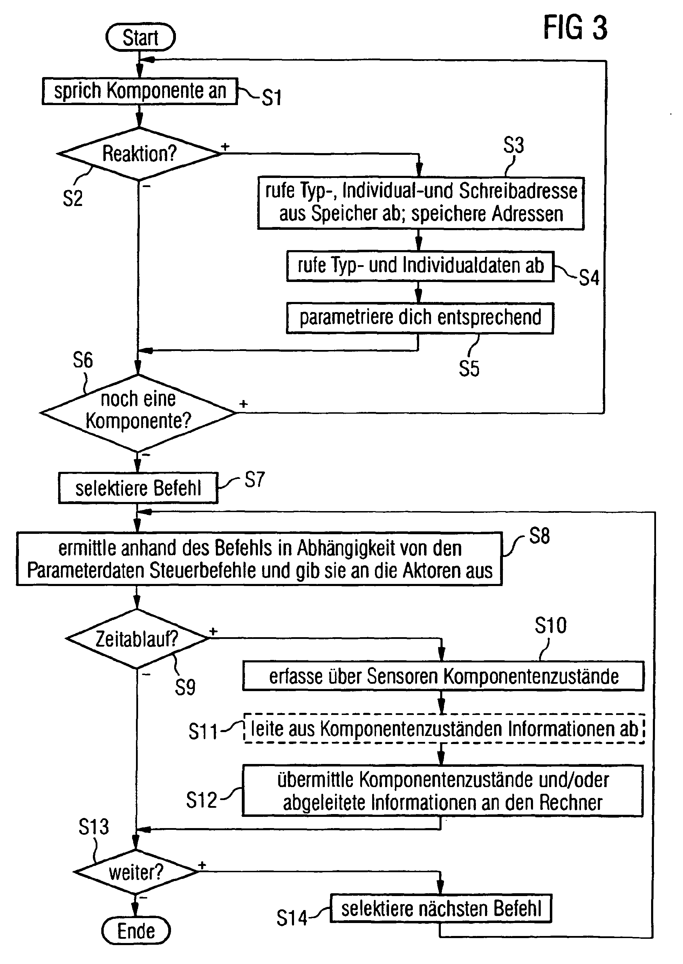

Die Ermittlung der Steuerbefehle für den Aktor 8, den Motor 4 und auch für andere, in FIG 1 nicht dargestellte Aktoren durch die Steuereinrichtung 2 erfolgt in Abhängigkeit von einem Steuerprogramm 12, das der Steuereinrichtung 2 von einem Anwender 13 vorgegeben wird. Das Steuerprogramm 12 enthält eine Anzahl von Befehlen, z.B. ein Teileprogramm gemäß DIN 66025. Zur Ermittlung der an die einzelnen Aktoren 4, 8 usw. auszugebenden Steuerbefehle führt die Steuereinrichtung 2 ein Steuerverfahren aus, das nachfolgend in Verbindung mit den FIG 2 und 3 näher erläutert wird.

Gemäß FIG 2 ist einer Anzahl der Komponenten 3 bis 11 - beispielhaft dargestellt ist dies in FIG 2 für den Sensor 6, die Ein-/Ausgabebaugruppe 3, den Motor 4 und das triebe 9 - je ein Linkadresse nsatz zugeordnet. Jeder Linkadresse nsatz umfasst drei Teiladressen. Es handelt sich dabei jeweils um eine Typadresse ATypS1, ATypB, ATypM, ATypG, eine Individualadresse AIndS1, AIndB, AIndM, AIndG sowie eine Schreibadresse AWriS1, AWriB, AWriM, AWriG.

Jede dieser Adressen ermöglicht den Zugriff auf einen der jeweiligen Adresse zugeordneten Speicherbereich 14 bis 16 eines Rechners 17. Der Rechner 17 ist dabei eine von der Steuereinrichtung 2 verschiedene Einrichtung 17. Der Rechner 17 ist mit der Steuereinrichtung 2 über eine Rechner-Rechner-Verbindung 18 aber zumindest temporär verbindbar. Die Rechner-Rechner-Verbindung 18 kann dabei prinzipiell beliebig ausgebildet sein. Im Einzelfall ist es möglich, dass die Rechner-Rechner-Verbindung 18 als Punkt-zu-Punkt-Verbindung ausgebildet ist. In der Regel aber ist sie als Rechnernetz ausgebildet, z.B. als LAN (LAN = Local area network) oder als Internet.

Die Adressen sind in Adressspeichern 19 bis 21 hinterlegt, die - je nach Komponente 3, 4, 6, 9 - entweder an der Komponente 3, 4, 6 selbst oder an einer der Komponente 9 beigeordneten Komponente 4 angeordnet sind. Die Adressspeicher 19 bis 21 werden dabei bei der Montage der Werkzeugmaschine 1 mit der Steuereinrichtung 2 datentechnisch verbunden.

Die Steuereinrichtung 2 ist daher in der Lage, gemäß FIG 3 in einem Schritt S1 zunächst eine der Komponenten 3 bis 11, z.B. die Komponente 4, anzusprechen. In einem Schritt S2 wartet die Steuereinrichtung 2 dann ab, ob die angesprochene Komponente 4 reagiert. Erfolgt eine Reaktion, werden zunächst Schritte S3 bis S5 ausgeführt. Anderenfalls wird direkt zu einem Schritt S6 verzweigt.

Im Schritt S3 ruft die Steuereinrichtung 2 die Typ-, die Individual- und die Schreibadresse der angesprochenen Komponente 4, also im gegebenen Beispiel die Adressen ATypM, AIndM und AWriM, aus der Komponente 4 ab und speichert sie in einem nicht dargestellten Speicherbereich der Steuereinrichtung 2 ab. Sie greift also zunächst auf die Linkadressen der angesprochenen Komponente 4 zu. Mittels der Typadresse ATypM greift die Steuereinrichtung sodann im Schritt S4 auf den zugeordneten der Speicherbereiche 14 bis 16 des Rechners 17 zu und ruft die dort hinterlegten Parameterdaten für die jeweilige Komponente ab. Das gleiche tut sie bezüglich der Individualadresse AIndM. Mittels der Typadresse ATypM wird der Steuereinrichtung 2 dabei der Zugriff auf bauartspezifische Parameterdaten der jeweiligen Komponente 4 ermöglicht. Mittels der Individualadresse AIndM sind komponenten-, anwender- und anwendungsindividuelle Parameterdaten aus dem Rechner 17 abrufbar. Die Zuordnung der übermittelten Linkadresse zum korrespondierenden Speicherbereich 14 bis 16 erfolgt dabei innerhalb des Rechners 17 mittels einer Lookup-Table 22.

Im Schritt S5 parametriert sich die Steuereinrichtung 2 entsprechend den abgerufenen Parameterdaten der jeweiligen Komponente 4 und realisiert so eine plug & play-Funktionalität.

Im Schritt S6 überprüft die Steuereinrichtung 2, ob noch eine weitere Komponente, z.B. die Komponente 6, angesprochen werden soll. Wenn dies der Fall ist, wird zum Schritt S1 zurück gesprungen. Anderenfalls wird ein Schritt S7 ausgeführt, mit dem die Abarbeitung des Steuerprogramms 12 beginnt.

Im Schritt S7 selektiert die Steuereinrichtung 2 einen Befehl des Steuerprogramms 12. In einem Schritt S8 ermittelt sie dann anhand des selektierten Befehls Steuerbefehle für Aktoren 4, 8 usw. der Werkzeugmaschine 1 und gibt sie an diese aus. Die Ermittlung der Steuerbefehle im Schritt S8 erfolgt dabei in Abhängigkeit von der Parametrierung der Steuereinrichtung 2 und damit in Abhängigkeit von den Parameterdaten der Komponenten 3 bis 11.

In einem Schritt S9 überprüft die Steuereinrichtung 2 sodann, ob eine bestimmte Wartezeit verstrichen ist. Die Wartezeit kann dabei, je nach Maschine 1 und je nach Komponente 3 bis 11, beliebige Werte annehmen. Wenn die Wartezeit verstrichen ist, führt die Steuereinrichtung 2 Schritt S10 bis S12 aus, anderenfalls geht sie direkt zu einem Schritt S13 über. Der Schritt S11 ist dabei nur optional und daher in FIG 3 nur gestrichelt dargestellt.

Im Schritt S10 erfasst die Steuereinrichtung 2 über die Sensoren 6, 7 Zustände der zugeordneten Komponenten 9, 10. Beispielsweise kann mittels des Sensors 6 die Temperatur des Getriebes 9 erfasst werden. Im Schritt S11 kann gegebenenfalls anhand der erfassten Komponentenzustände eine korrespondierende Information abgeleitet werden. Ein Beispiel einer derartigen abgeleiteten Information wäre beispielsweise ein Überhitzungssignal, wenn die erfasste Temperatur einen vorbestimmten Grenzwert übersteigt.

Im Schritt S12 übermittelt die Steuereinrichtung 2 an die Schreibadresse der betreffenden Komponente, hier die Schreibadresse AWriG, den erfassten Komponentenzustand (im gegebenen Beispiel die Temperatur des Getriebes 9) und/oder eine daraus abgeleitete Information (im gegebenen Beispiel ein Überhitzungssignal). Sie übermittelt diese Information also an den Rechner 17. Der Rechner 17 speichert die übermittelten Daten im korrespondierenden Speicherbereich 14 bis 16, hier dem Speicherbereich 16, ab. Die Ermittlung des Speicherbereichs 16 durch den Rechner 17 erfolgt dabei anhand der angegebenen Schreibadresse (hier AWriG) und der Lookup-Table 22.

Im Schritt S13 überprüft die Steuereinrichtung 2, ob die Ausführung des Steuerverfahrens fortgesetzt werden soll. Denn beispielsweise könnte ihr vom Anwender 13 ein Beendigungsbefehl oder ein Nothalt-Signal vorgegeben worden sein. Je nach dem Ergebnis der Prüfung beendet die Steuereinrichtung 2 die weitere Ausführung des Steuerverfahrens oder sie geht zu einem Schritt S14 über. Im Schritt S14 selektiert die Steuereinrichtung 2 den als nächstes auszuführenden Befehl des Steuerprogramms 12. Danach springt sie zum Schritt S8 zurück.

Das Steuerverfahren ist gemäß FIG 1 als Computerprogramm 23 implementiert. Es wird der Steuereinrichtung 2 z.B. über einen Datenträger 24 zugeführt, auf dem das Computerprogramm in (ausschließlich) maschinenlesbarer Form gespeichert ist. Beispiele eines derartigen Datenträgers 24 sind eine Diskette oder eine CD-ROM. Auch ein Herunterladen von einem anderen Rechner, z.B. dem Rechner 17, ist möglich.

Beim Zuführen des Computerprogramms 23 zur Steuereinrichtung 2 wird das Computerprogramm 23 aus dem Datenträger 24 ausgelesen und in einen Programmspeicher 25 der Steuereinrichtung 2 übernommen. Dort wird es derart gespeichert bzw. hinterlegt, dass es auch bei einem Abschalten der Energieversorgung der Steuereinrichtung 2 erhalten bleibt. Bei einer Wiederkehr der Versorgungsspannung ist das Computerprogramm 23 daher sofort verfügbar, so dass es bei Aufruf ohne Weiteres ausführbar ist.

Mittels des erfindungsgemäßen Steuerverfahrens ist somit auf einfache Weise und mit geringem Aufwand eine korrekte Parametrierung der Steuereinrichtung 2 möglich.

## Patentansprüche

1. Steuerverfahren für eine Produktionsmaschine (1), insbesondere eine Werkzeugmaschine (1), durch eine der Produktionsmaschine (1) zugeordnete Steuereinrichtung (2),
- wobei die Produktionsmaschine (1) eine Anzahl von Komponenten (3 bis 11) aufweist,
- wobei entweder der jeweiligen Komponente (3 bis 11) selbst oder einer der jeweiligen Komponente (3 bis 11) beigeordneten Komponente (3 bis 11) jeweils ein Adressspeicher (19 bis 21) zugeordnet ist, in dem jeweils ein Linkadressensatz zu Speicherbereichen (14 bis 16) eines Rechners (17) hinterlegt ist, in denen Parameterdaten für die jeweilige Komponente (3 bis 11) hinterlegt sind,
- wobei der Rechner (17) eine von der Steuereinrichtung (2) verschiedene Einrichtung (17) ist und mit der Steuereinrichtung (2) über eine Rechner-Rechner-Verbindung (18) zumindest temporär verbindbar ist,
- wobei die Steuereinrichtung (2) auf den Linkadressensatz und mittels des Linkadressensatzes auf die Parameterdaten zugreift,
- wobei die Steuereinrichtung (2) anhand eines Steuerprogramms (12) Steuerbefehle für Aktoren (z. B. 4, 8) der Produktionsmaschine (1) ermittelt und an diese ausgibt,
- wobei die Steuerbefehle von den Parameterdaten abhängen,
- wobei der Linkadressensatz eine Typadresse (z. B. ATypM) und eine Individualadresse (z. B. AIndM) umfasst,
- wobei mittels der Typadresse (ATypM) bauartspezifische Parameterdaten der jeweiligen Komponente (z. B. 4) aus dem Rechner (17) abgerufen werden und
- wobei mittels der Individualadresse (AIndM) komponenten-, anwender- und/oder anwendungsindividuelle Parameterdaten aus dem Rechner (17) abgerufen werden.

2. Steuerverfahren nach Anspruch 1,
**dadurch gekennzeichnet,**
**dass** der Linkadressensatz eine Schreibadresse (AWriG) umfasst, dass die Steuereinrichtung (2) über mindestens einen Sensor (6) für mindestens eine (9) der Komponenten (3 bis 11) einen Komponentenzustand erfasst und dass die Steuereinrichtung (2) zumindest von Zeit zu Zeit den erfassten Komponentenzustand oder eine aus dem erfassten Komponentenzustand abgeleitete Information über die dieser Komponente (9) zugeordnete Schreibadresse (AWriG) an den Rechner (17) übermittelt.

3. Datenträger mit einem auf dem Datenträger gespeicherten Computerprogramm (23), das Maschinencode enthält, wobei eine Steuereinrichtung (2) für eine Produktionsmaschine (1) bei Abarbeitung des Computerprogramms (23) ein Steuerverfahren nach Anspruch 1 oder 2 durchführt.

4. Steuereinrichtung für eine Produktionsmaschine (1), insbesondere eine Werkzeugmaschine (1), mit einem Programmspeicher (25), in dem ein Computerprogramm (23) hinterlegt ist, das Maschinencode enthält, wobei die Steuereinrichtung bei Abarbeitung des Computerprogramms (23) ein Steuerverfahren nach Anspruch 1 oder 2 ausführt.

5. Produktionsmaschine, insbesondere Werkzeugmaschine, mit einer zugeordneten Steuereinrichtung (2) und einer Anzahl von Komponenten (3 bis 11),
- wobei jeder Komponente (3 bis 11) ein Adressspeicher (19 bis 21) zugeordnet ist, in dem jeweils ein Linkadressensatz zu mindestens einem Speicherbereich (14 bis 16) eines Rechners (17) hinterlegt ist, der eine von der Steuereinrichtung (2) verschiedene Einrichtung (17) ist,
- wobei die Adressspeicher (19 bis 21) jeweils entweder an der jeweiligen Komponente (3 bis 11) selbst oder an einer der jeweiligen Komponente (3 bis 11) beigeordneten Komponente (3 bis 11) angeordnet sind,
- wobei die Steuereinrichtung (2) mit den Adressspeichern (19 bis 21) datentechnisch verbunden ist,
- wobei die Steuereinrichtung (2) mit dem Rechner (17) über eine Rechner-Rechner-Verbindung (18) zumindest temporär verbindbar ist und
- wobei von der Steuereinrichtung (2) im Betrieb der Produktionsmaschine ein Steuerverfahren nach Anspruch 1 oder 2 ausgeführt wird.

## Claims

1. Control method for a production machine (1), in particular a machine tool (1), by means of a control facility (2) assigned to the production machine (1),
- the production machine (1) having a number of components (3 to 11),
- an address memory (19 to 21) being assigned respectively either to the respective component (3 to 11) itself or a component (3 to 11) associated with the respective component (3 to 11), in which address memory (19 to 21) a link address set is stored for memory areas (14 to 16) of a computer (17), in which parameter data for the respective component (3 to 11) is stored,
- the computer (17) being a different facility (17) from the control facility (2) and being able to be connected at least temporarily to the control facility (2) by way of a computer-to-computer link (18),
- the control facility (2) accessing the link address set and using the link address set to access the parameter data,
- the control facility (2) determining control commands for actuators (e.g. 4, 8) of the production machine (1) based on a control programme (12) and outputting the control commands to said actuators (e.g. 4, 8),
- the control commands being a function of the parameter data,
- the link address set comprising a type address (e.g. ATypM) and an individual address (e.g. AIndM),
- design-specific parameter data of the respective component (e.g. 4) being called up from the computer (17) using the type address (ATypM) and
- component-specific, user-specific and/or application-specific parameter data being called up from the computer (17) using the individual address (AIndM).

2. Control method according to claim 1,
**characterised in that**
the link address set comprises a write address)AWriG), the control facility (2) detects a component state for at least one (9) of the components (3 to 11) by way of at least one sensor (6) and the control facility (2) transmits the detected component state or information derived from the detected component state to the computer (17) at least from time to time by way of the write address (AWriG) assigned to this component (9).

3. Data medium with a computer programme (23) stored on the data medium and containing machine code, with a control facility (2) for a production machine (1) implementing a control method according to claim 1 or 2 when executing the computer programme (23).

4. Control facility for a production machine (1), in particular a machine tool (1), with a programme memory (25), in which a computer programme (23) is stored, which contains machine code, with the control facility implementing a control method according to claim 1 or 2 when executing the computer programme (23).

5. Production machine, in particular a machine tool, with an assigned control facility (2) and a number of components (3 to 11),
- an address memory (19 to 21) being assigned to each component (3 to 11), in which a link address set is respectively stored for at least one memory area (14 to 16) of a computer (17), which is a different facility (17) from the control facility (2),
- the address memories (19 to 21) being arranged respectively either on the respective component (3 to 11) itself or on a component (3 to 11) associated with the respective component (3 to 11),
- the control facility (2) being connected to the address memories (19 to 21) for data transfer purposes,
- the control facility (2) being able to be connected to the computer (17) at least temporarily by way of a computer-to-computer link (18) and
- a control method according to claim 1 or 2 being implemented by the control facility (2) during operation of the production machine.

## Revendications

1. Procédé de commande pour une machine de production (1), notamment pour une machine-outil (1), par un dispositif de commande (2) associé à la machine de production (1), dans lequel
- la machine de production (1) comporte un certain nombre de composants (3 à 11),
- une mémoire d'adresses (19 à 21) est associée à chaque fois soit au composant respectif (3 à 11) lui-même, soit à un composant (3 à 11) adjoint au composant respectif (3 à 11), mémoire d'adresses dans laquelle est enregistré à chaque fois un ensemble d'adresses de liaison vers des zones de mémoire (14 à 16) d'un ordinateur (17) dans lesquelles des données de paramètres sont enregistrées pour le composant respectif (3 à 11),
- l'ordinateur (17) est un dispositif (17) différent du dispositif de commande (2) et il peut être relié au moins temporairement au dispositif de commande (2) par l'intermédiaire d'une liaison d'ordinateur à ordinateur (18),
- le dispositif de commande (2) accède à l'ensemble d'adresses de liaison et, au moyen de l'ensemble d'adresses de liaison, aux données de paramètres,
- le dispositif de commande (2) détermine à l'aide d'un programme de commande (12) des instructions de commande pour des actionneurs (par exemple 4, 8) de la machine de production (1) et il les transmet à ceux-ci,
- les instructions de commande dépendent des données de paramètres,
- l'ensemble d'adresses de liaison comprend une adresse de type (par exemple ATypM) et une adresse individuelle (par exemple AIndM),
- au moyen de l'adresse de type (ATypM), des données de paramètres, spécifiques au type de construction, du composant respectif (par exemple 4) sont demandées à l'ordinateur (17), et
- au moyen de l'adresse individuelle (AIndM), des données de paramètres propres au composant, à l'utilisateur et/ou à l'application, sont demandées à l'ordinateur (17).

2. Procédé de commande selon la revendication 1,
**caractérisé par le fait que**
l'ensemble d'adresses de liaison comprend une adresse d'écriture (AWriG), que le dispositif de commande (2) détecte un état de composant par l'intermédiaire d'au moins un capteur (6) pour au moins l'un (9) des composants (3 à 11) et que le dispositif de commande (2) transmet au moins de temps en temps à l'ordinateur (17) l'état de composant détecté ou une information déduite de l'état de composant détecté, cette transmission s'effectuant par l'intermédiaire de l'adresse d'écriture (AWriG) associée à ce composant (9).

3. Support de données avec un programme informatique (23) qui est mémorisé sur le support de données et qui contient du code machine, un dispositif de commande (2) pour une machine de production (1) réalisant lors de l'exécution du programme informatique (23) un procédé de commande selon la revendication 1 ou 2.

4. Dispositif de commande pour une machine de production (1), notamment pour une machine-outil (1), avec une mémoire de programme (25) dans laquelle est enregistré un programme informatique (23) qui contient du code machine, le dispositif de commande réalisant lors de l'exécution du programme informatique (23) un procédé de commande selon la revendication 1 ou 2.

5. Machine de production, notamment machine-outil, avec un dispositif de commande associé (2) et avec un certain nombre de composants (3 à 11), dans laquelle
- il est associé à chaque composant (3 à 11) une mémoire d'adresses (19 à 21) dans laquelle est enregistré à chaque fois un ensemble d'adresses de liaison vers au moins une zone de mémoire (14 à 16) d'un ordinateur (17) qui est un dispositif (17) différent du dispositif de commande (2),
- les mémoires d'adresses (19 à 21) sont agencées à chaque fois soit sur le composant respectif (3 à 11) lui-même, soit sur un composant (3 à 11) adjoint au composant respectif (3 à 11),
- le dispositif de commande (2) est relié informatiquement aux mémoires d'adresses (19 à 21),
- le dispositif de commande (2) peut être relié au moins temporairement à l'ordinateur (17) par l'intermédiaire d'une liaison d'ordinateur à ordinateur (18), et
- un procédé de commande selon la revendication 1 ou 2 est exécuté par le dispositif de commande (2) au cours du fonctionnement de la machine de production.
